(19) Europäisches Patentamt

European Patent Office

Office européen des brevets

(11) **EP 0 976 262 B1**

(12) **EUROPEAN PATENT SPECIFICATION**

(45) Date of publication and mention
of the grant of the patent:
**05.11.2003 Bulletin 2003/45**

(51) Int Cl.$^7$: **H04Q 7/20**, H04Q 7/38,
G01S 5/14, G01S 1/04

(21) Application number: **97945450.1**

(22) Date of filing: **29.09.1997**

(86) International application number:
**PCT/US97/17786**

(87) International publication number:
**WO 98/014018 (02.04.1998 Gazette 1998/13)**

(54) **METHOD AND SYSTEM FOR MOBILE LOCATION ESTIMATION**

VERFAHREN UND SYSTEM ZUR SCHÄTZUNG DER POSITION DER MOBILEN STATION

PROCEDE ET SYSTEME D'ESTIMATION DE POSITION DE STATION MOBILE

(84) Designated Contracting States:
**AT BE CH DE DK ES FI FR GB GR IE IT LI LU MC
NL PT SE**
Designated Extension States:
**AL LT LV RO SI**

(30) Priority: **27.09.1996 US 27453 P**

(43) Date of publication of application:
**02.02.2000 Bulletin 2000/05**

(73) Proprietor: **RUTGERS UNIVERSITY
Piscataway, NJ 08855-1179 (US)**

(72) Inventors:
• **WYLIE, Marilynn, P.
Philadelphia, PA 19151 (US)**
• **HOLTZMAN, Jack, M.
Westfiled, NJ 07090 (US)**

(74) Representative: **Kuhnen & Wacker
Patentanwaltsgesellschaft dbR
Postfach 19 64
85319 Freising (DE)**

(56) References cited:
| US-A- 5 257 405 | US-A- 5 327 144 |
| US-A- 5 390 124 | US-A- 5 629 707 |

• **IEEE VEHICULAR TECHNOLOGY
CONFERENCE, 1992, BORJESON et al.,
"Outdoor Microcell Measurements at 1700 MHz",
pages 927-931.**

**Description**

Background of the Invention

1. Field of the Invention

The present invention relates to a method for mobile station location estimation according to claim 1 and also to a system for mobile station location estimation according to claim 11.

According to the inventive method and system base stations that are in line of sight of the mobile station and base stations that are not in the line of sight of the base station can be determined. Errors in base station signals generated from determined non-line of sight base stations are reduced for providing improved mobile station location estimation.

2. Description pf the Related Art

From US-A-5,327,144 a cellular telephone location system for automatically recording the location of one or more mobile cellular telephones comprises three or more cell site systems. Each cell site system is located at a cell site of a cellular telephone system. Each cell site system includes an antenna that may be mounted on the same tower or building as the antenna employed by the cellular telephone system and equipment that may be housed in the equipment enclosure of the corresponding cell site. The cell site systems are coupled via communication links to a central site. The central site may be collocated with the cellular telephone systems'MTSO. The central site is further coupled to a data base, which may be remotely located from the central site and made available to subscribers.

Mobile location estimation determines a geographical estimate of the location of a mobile station. Mobile location estimation is useful in management of fleets of mobile stations, location dependent information services, location dependent billing services and Emergency 911 location of a mobile station. Enhanced 911 is designed to automatically forward the number of a caller to a public safety answering point (PSAP). In implementing enhanced 911 in a wireless network, wireless service providers provide two dimensional location of the vehicle to the public safety answering point (PSAP). The Federal Communications Commission (FCC) has regulated by the year 2001 that wireless service providers have the capability of locating callers in two dimensions within 125 meters 67% of the time.

One conventional method for locating a mobile station in two dimensions would use the measurement of the line of sight distance between the mobile station and at least three base stations. U.S. Patent No. 5,365,516 describes a method for determining the location of a transponder unit in which a radio signal is sent by the mobile station. The arrival time of the radio signal is measured at each of three base stations. Each distance measurement between the mobile station and one of the base stations can be used to generate a circle which is centered at the measuring base station. The circle has a radius which is equal to the distance between the mobile station and the base station. Accordingly, three circles are generated, one for each of the base stations. In the absence of any measurement error of the distance between the base stations and the mobile station, the intersection of the three circles unambiguously determines the location of the mobile station. This method has the drawback that the distance measurements can be corrupted by noise resulting in errors in determining the location of the mobile station.

A conventional solution for providing more accurate position estimates is to reduce the error due to noise with a least squares analysis. Accordingly, the least squares analysis provides a more accurate position estimate. This solution has the limitation of not accounting for the possibility of a lack of a direct path between the base station and the mobile station. For example, in an urban environment, a building or buildings may be in the path between the mobile station and the base station. A propagating signal between the mobile station and the base station can be reflected and defracted by the object in the path of the mobile station to the base station resulting in the signal traveling excess path lengths. The excess path lengths can be on the order of a hundred meters.

The lack of direct path between the mobile station and the base station can be defined as a non-line of sight (NLOS). The importance of detecting and reducing the NLOS measurements between a mobile station and a base station is recognized in M.I. Silventoinen, et al., "Mobile Station Locating in GSM", IEEE Wireless Communication System Symposium, Long Island NY, November 1995 and J.L. Caffrey et al., "Radio Location in Urban CDMA Microcells", Proceedings of the Personal, Indoor and Mobile Radio Environment, 1995.

U.S. Patent No. 5,365,516 ('516 patent) describes an embodiment of a transreceiver locating system operating in an environment susceptible to multipath interference. The system includes a transponder, which is operable within a prescribed coverage area to transmit a burst of data symbols in a coded carrier pulse. Each base station includes a receiver for detecting and responding to the data symbol at a given time, interrupting the data symbol and rejecting echoes resulting from multipath interference. A comparison circuit responds to the receiver for comparing respectively identified given times and decorrelating the time difference to improve data quality. Although the '516 patent addresses multipath interference, it does not attempt to detect base stations for reducing multipath NLOS with mobile stations.

It is desirable to provide a method and system for providing improved mobile location estimation, which is robust to NLOS error.

Summary of the Invention

It is an object of the present invention to provide a method and a system for mobile location estimation, in which base stations can be easily identified to be either line of sight (LOS) or non-line of sight (NLOS) with a mobile station.

According to the inventive method this object is solved by the features of claim 1.

Improved embodiments of the inventive method result from the subclaims 2 to 10.

According to the inventive system the above object is solved by the features of claim 11.

Improved embodiments of the inventive system result from the subclaims 12 to 19.

According to the present invention a range measurement is determined as the distance between the base station and the mobile station. NLOS ranging error is corrected for base stations identified to be NLOS with the mobile station by reconstructing the LOS measurement. From the range measurements of base stations identified as LOS and the reconstructed LOS range measurements the location of the mobile station is estimated.

The base station can be identified as being NLOS by comparing the standard deviation of standard measurement noise from the environment to the standard deviation of a smoothed range measurement obtained from the range measurements between the base station and mobile station. The smoothed range measurement can be obtained using an $N^{th}$ order polynomial fit. It has been found that when the standard deviation of the smoothed range measurement is on the order of the standard deviation of the standard measurement noise, the base station corresponds to an LOS environment and when the standard deviation of the smoothed range measurement is greater than the standard deviation due to standard measurement noise, the base station corresponds to an NLOS environment. Alternatively, the residuals from a least squares analysis can be used to determine the presence of NLOS range measurements.

NLOS error can be corrected when the standard measurement noise dominates the NLOS error and there is predetermined identification of the approximate support of the standard measurement noise over the real axis. A reconstructed LOS range measurement can be determined by graphing a curve of the smoothed range measurements. The point of maximum deviation of the smoothed range measurement below the curve is determined. The curve is displaced downwards to pass through the point of maximum deviation. Thereafter, the curve is displaced upwards by the value of the maximum standard measurement noise deviation from an LOS measurement with negligible noise, thereby providing a reconstructed range measurement.

The mobile location estimation can be determined using at least three range measurements between LOS base stations and the mobile station or reconstructed LOS range measurements in a multilateration analysis. In this analysis, a circle is generated from each range measurement. The circle is centered at the base station and the range measurement is the radius of the circle. The estimated intersection of the three circles determines the location of the mobile station. Alternatively, two range measurements and information directed to the position angle of the mobile station can be used for estimating the location of the mobile station.

The present invention has the advantages of accurately determining the location of a mobile station by reducing NLOS error. In addition, the present invention can provide confidence in an LOS environment that all base stations are LOS with the mobile station. Results indicate that position range bias due to NLOS error can be reduced several orders of magnitude with the method of the present invention.

The present invention will be more fully described by reference to the following drawings.

Brief Description of the Drawings

Fig. 1A is a schematic diagram of an environment in which there is an unobstructed line of sight radio signal path between a mobile station and a base station.

Fig. 1B is a schematic diagram of an environment in which there is a non-line sight radio signal path between a mobile station and a base station.

Fig. 2 is a flow diagram of the system and method for mobile location estimation in accordance with the teachings of the present invention.

Fig. 3 is a schematic diagram of distance measurements of a reconstructed line of sight base station and determined line of sight base stations.

Fig. 4 is a flow diagram of a method for identifying non-line of sight base stations of the present invention.

Fig. 5 is a flow diagram of an alternate method for identifying non-line of sight base stations.

Fig. 6 is a flow diagram of a method for reconstructing a line of sight base station for non-line of sight measurements.

Fig. 7 is a graph of a comparison of NLOS measurements and reconstructed LOS measurements.

Fig. 8 is a schematic diagram of a system for implementing the method of the present invention.

Fig. 9 is a schematic diagram of positioning of base stations used in examples of performance of the method of the present invention.

Fig. 10A is a graph of two dimensional tracking without non line of sight error detection and correction.

Fig. 10B is a graph of two dimensional tracking with non line of sight error detection and correction.

Fig. 11A is a graph of two dimensional tracking without non line of sight error detection and correction.

Fig. 11B is a graph of two dimensional tracking with non line of sight error detection and correction.

Fig. 12 is a graph of the fraction of time a base station was declared NLOS using the residual rank analysis method.

## Detailed Description of the Present Invention

During the course of this description like numbers will be used to identify like elements according to the different figures which illustrate the invention.

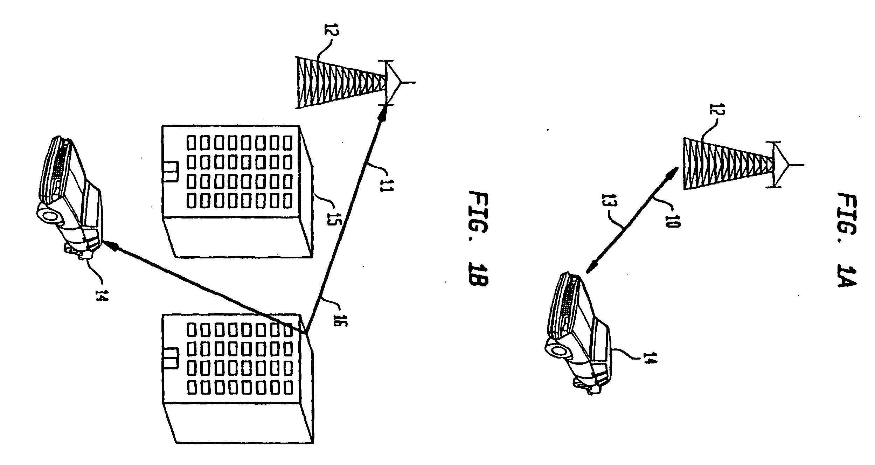

Fig. 1A illustrates a schematic diagram of a line of sight (LOS) path 10 between a base station 12 and mobile station 14. Signal 13 can be transmitted from base station 12 to mobile station 14 and returned from mobile station 14 to base station 12. Fig. 1B illustrates a schematic non-line of sight (NLOS) path 11 between base station 12 and mobile station 14. Building 15 is positioned between base station 12 and mobile station 14 resulting in reflection of signal 16. For example, signal 13 and signal 16 can be a radio signal.

A range measurement for measuring the distance between base station 12 and mobile station 14 can be measured as the time it takes a signal sent between base station 12 and mobile station 14:

$$r = cT \qquad (1)$$

in which the mobile station to base station range measurement is represented by r, c represents the speed of light which is the same speed as the propagation of radio waves and T represents the one-way travel time of the signal. A range measurement of the distance between mobile station 14 and base station 12 in Fig. 1A and 1B can be determined using equation (1) based on travel time of signal 13 and signal 16, respectively, between base station 12 and mobile station 14. The value of r generated from signal 16 is greater than the value of r generated for signal 13.

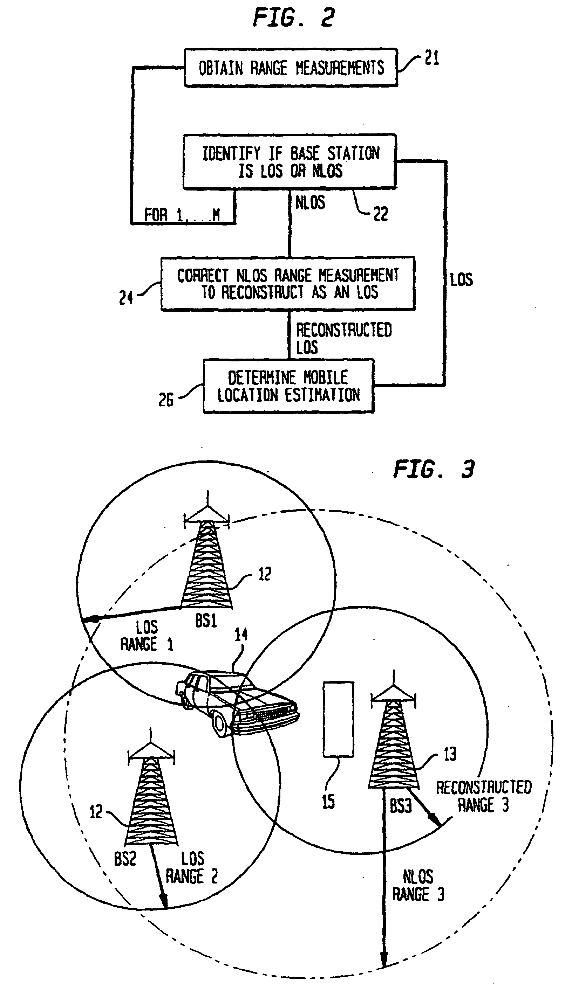

Fig. 2 is a flow diagram of the system and method of the present invention for mobile location estimation 20. In block 21, a range measurement is obtained between mobile station 14 and base station 12 using equation (1). In block 22, base station 12 is identified as being in line of sight (LOS) or non-line of sight (NLOS) with mobile station 14. Block 22 is repeated for a plurality of base stations 12 positioned at different locations from mobile station 14. If base station 12 is identified to be LOS in block 22, the range measurement obtained from block 21 is forwarded to block 26. If base station 12 is identified to be NLOS in block 22, block 24 is implemented for reducing the error of the range measurement between base station 12 and mobile station 14, thereby rendering the range measurement between base station 12 and mobile station 14 as a reconstructed LOS base station 13, as shown in Fig. 3.

In Fig. 3, base station 12 labeled BS1 has a range measurement labeled LOS RANGE 1 determined to be LOS. Base station 12 labeled BS2 has a range measurement labeled LOS RANGE 2 determined to be LOS. Base station 13 labeled BS3 has a range measurement labeled NLOS RANGE 3 determined to be NLOS. A range measurement for the reconstructed LOS base station labeled RECONSTRUCTED RANGE 3 is forwarded to block 26. Range measurements from determined LOS base stations from block 22 labeled LOS RANGE 1, and LOS RANGE 2 are also forwarded to block 26. From the range measurements of the reconstructed LOS base stations or the determined LOS base stations, or a combination of range measurements of the reconstructed LOS the mobile location estimation can be identified using a conventional multilateration technique, such as described in U.S. Patent No. 5,365,516. Alternatively, the mobile location estimation can be determined from time difference of arrival time measurements as the difference of propagation delays between the mobile station 14 and pairs of base stations 12. In this case, the position estimate is at the intersection of hyperbolas. The number of base stations can be reduced below three if there is also angle of arrival information. These methods are described in T S. Rappaport et al., " Position Location Using Wireless Communication On Highways Of the Future", IEEE Communications Magazine, October 1996.

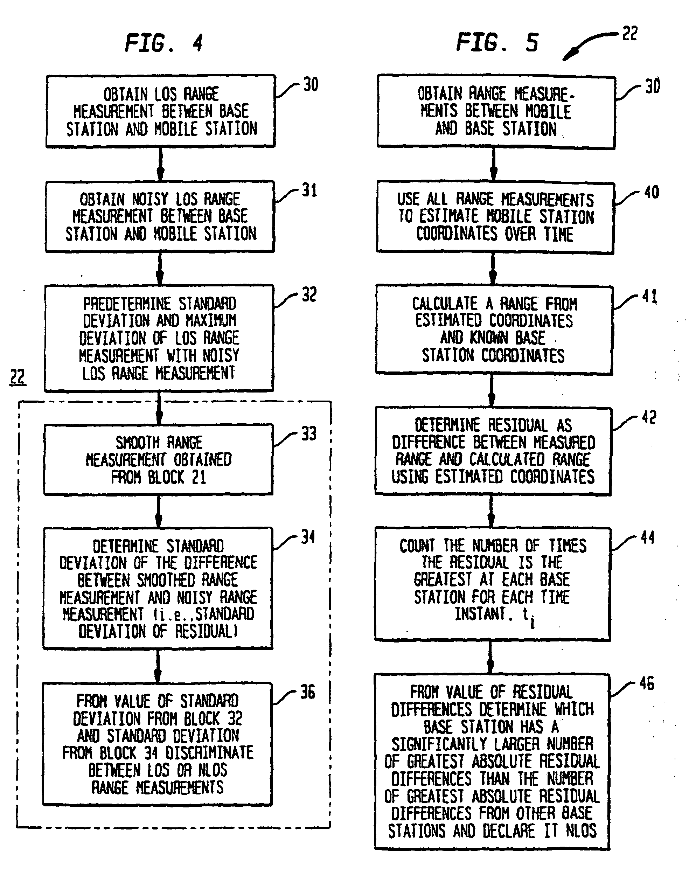

One method for identifying if a base station is LOS or NLOS in block 22 is illustrated in Fig. 4. In this method, the time history of range measurements between base station 12 and mobile station 14 is combined with predetermined standard deviation from conventional measurement noise in a radio signal environment.

The arrival time of signals sent from base station 12 to a mobile station 14 and transponded back to the base station 12 can be converted to a range measurement, in block 30. The range measurement at the $m^{th}$ base station at time $t_k$ can be represented as:

$$r_m(t_i) = L_m (t_i) + n_m (t_i) + NLOS_m (t_i) \tag{2}$$

for $m = 1, ..., M$ $i = 0, ... K-1$, wherein

$L_m (t_i)$ is the LOS distance between a mobile station and the $m^{th}$ base station in two dimensions which is given by:

$$L_m(t_i) = |x(t_i)+j^*y(t_i)-x_m-j^*y_m|; \tag{3}$$

$x(t_i)$, $y(t_i)$ and $(x_m, y_m)$ are respectively the coordinates of the mobile station at time, $t_i$, and those of the $m^{th}$ base station; $n_m (t_i)$ represents conventional measurement noise such as additive white Gaussian measurement noise and $NLOS_m (t_i)$ represents NLOS measurement error at time $t_i$; and $M$ is the total number of base stations; and $K$ is the total number of time samples.

In block 30, an LOS range measurement with negligible noise is obtained for base station 12 in LOS with mobile station 14. The LOS range measurement can be obtained by physically measuring a range between base station 12 and mobile station 14 or can be obtained as a range measurement determined by equation (1) in a negligible noise environment. In block 31, a noisy range measurement is determined as a range measurement which is LOS with a base station taken in a noisy environment. In block 32, the standard deviation of the noisy range measurement from the LOS measurement without noise is determined. Blocks 30, 31 and 32 can be predetermined before identifying base station 12 as either LOS or NLOS in block 22. The standard deviation due to noise $n_m(t)$ can be represented by $\sigma_m$.

In block 32, the range measurement obtained from block 21 is smoothed by modeling

$$r_m (t_i) = \sum_{n=0}^{N-1} a_m (n) t_i^n \tag{4}$$

and solving for the unknown coefficients, $\{a_m (n)\}_{n=0}^{N-1}$ with a least squares technique. The smoothed range measurement can be represented as:

$$s_m (t_i) = \sum_{n=0}^{N-1} \hat{a}_m (n) t_i^n. \tag{5}$$

In block 34, the standard deviation of the smoothed range measurement from a noisy range measurement (i.e., the residual) is determined. The standard deviation of the residual from block 34 can be represented as $\hat{\sigma}_m$ since $\sigma_m^2 = E\{n_m^2 (t)\}$. The smoothed range measurements along with the noisy range measurement can be used to determine standard deviation $\hat{\sigma}_m$ with the formulation of:

$$\hat{\sigma}_m = \sqrt{\frac{1}{K} \sum_{i=0}^{K-1} (s_m (t_i) - r_m (t_i))^2} \tag{6}$$

From the value of the standard deviation, $\hat{\sigma}_m$ and the standard deviation $\sigma_m$, the range measurement can be determined as either the result of base station 12 being LOS or NLOS, in block 36. When the range measurement has NLOS error, the value of the standard deviation $\hat{\sigma}_m$ is significantly larger than the value of the standard deviation $\sigma_m$. Accordingly, range measurement for base station 12 that is NLOS with mobile station 14 is determined when the $\hat{\sigma}_m$ is greater than the standard deviation $\sigma_m$. A range measurement of base station 12 that is LOS with mobile station 14 is determined when the standard deviation $\hat{\sigma}_m$ is on the order of the standard deviation $\sigma_m$.

Alternatively, a residual analysis ranking method can be used to identify a range measurement as being from a base station 13 NLOS with mobile station 14. Range measurements between mobile station 12 and base station 14 which have been obtained in block 21 are inputted to block 41. At each instance of time $t_i$, estimated coordinates $\hat{x}_{LS} (t_i), \hat{y}_{LS}(t_i)$ of mobile station 14 are determined as least squares estimates in block 41. The estimated coordinates $\hat{x}_{LS} (t_i), \hat{y}_{LS}(t_i))$ are selected to minimize the formulation:

$$F_i = \sum_{m=1}^{M} (r_m(t_i) - \hat{L}_m(t_i))^2 \qquad (7)$$

where $\hat{L}_m(t_i) = |\hat{x}(t_i) - x_m + j^*\hat{y}(t_i) - j^*y_m|$.

In block 41, a calculated range measurement is determined from the estimated coordinates. In block 42, a residual difference of the range measurement between mobile station 12 and base station 14 with the calculated range measurement is determined. The residual difference can be represented as:

$$e_m(t_i) = r_m(t_i) - \hat{L}_m(t_i) \qquad (8)$$

In block 44, the number of times the residual difference of a range measurement to a base station 12 has the largest value in comparison to the residual difference determined for range measurements at other base stations is counted for each time instant $t_i$. It has been found that base stations having a range measurement between a base station NLOS with a mobile station have a significantly larger number of greatest absolute residual differences than the number of greatest absolute residual differences from other base stations. From the value of the counted number of residual differences, base station 14 can be defined as a base station 12 that is a LOS or a base station 12 that is NLOS with mobile station 14.

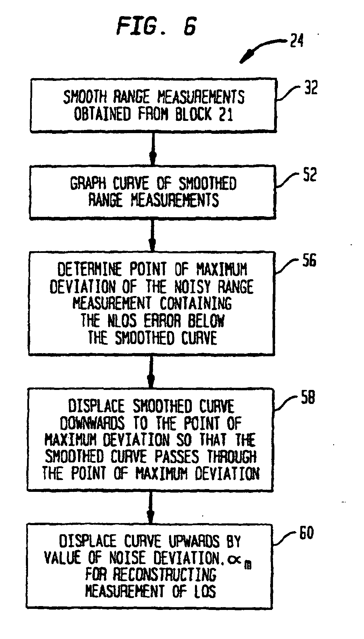

Fig. 6 illustrates a method for correction of range measurements between a base station 12 that has been determined NLOS with mobile station 14 to reconstruct a LOS range measurement. Data related to the range measurements from block 21 are smoothed using an $N^{th}$ order polynomial fit described in block 32. The smooth range measurements are inputted to block 52. The maximum deviation below the smoothed curve due to NLOS error in determined in block 56. It has been found that NLOS error is a non-negative random variable which can be approximately represented in a real axis as follows:

$$0 \le NLOSm(t_i) \le \beta m$$

in which $\beta m$ is the maximum value of NLOS error. The standard measurement noise, $n_m(t_i)$ can be represented as a zero-mean random variable which can be approximately represented in a real axis as follows: — $\alpha_m \le n_m(t_i) \le \alpha_m$, so that in a range measurement in which there is also an NLOS error, the total noise component can be approximated represented over the real axis as follows:

$$-\alpha_m \le n_m(t) + NLOS_m(t) \le \beta_m - \alpha_m$$

It has been found that the point of maximum deviation of the measured range below the smoothed curve is about $\alpha_m$ below the LOS function represented as $L_m(t_i)$. In block 58, the smoothed curve is displaced mathematically downward to the point of maximum deviation The smoothed curve is displaced mathematically upward by a value of the noise deviation $\alpha_m$ in block 60 to provide a reconstructed curve representing a reconstructed LOS base station.

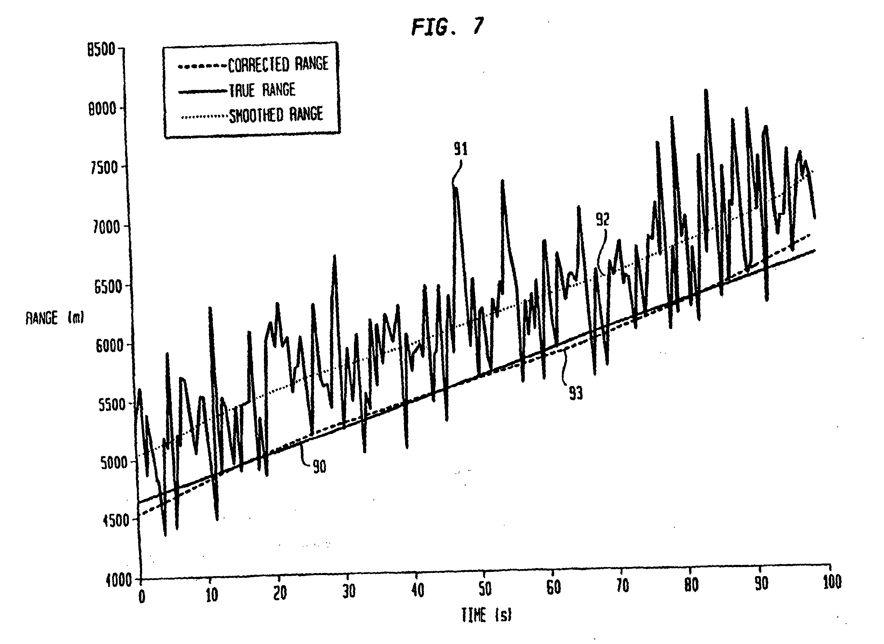

Fig. 7 represents a graph of a comparison of simulated range measurements. Curve 90 represents the true time range measurement between a base station 12 which is LOS with a mobile station 14. Curve 91 represents determined range measurements having NLOS error. Curve 92 represents a smoothed range measurement of block station 12 and mobile station 14 determined from block 30 of Fig. 4. Curve 93 represents base station 12 which is reconstructed LOS with the mobile station 14 from block 60 of Fig. 6.

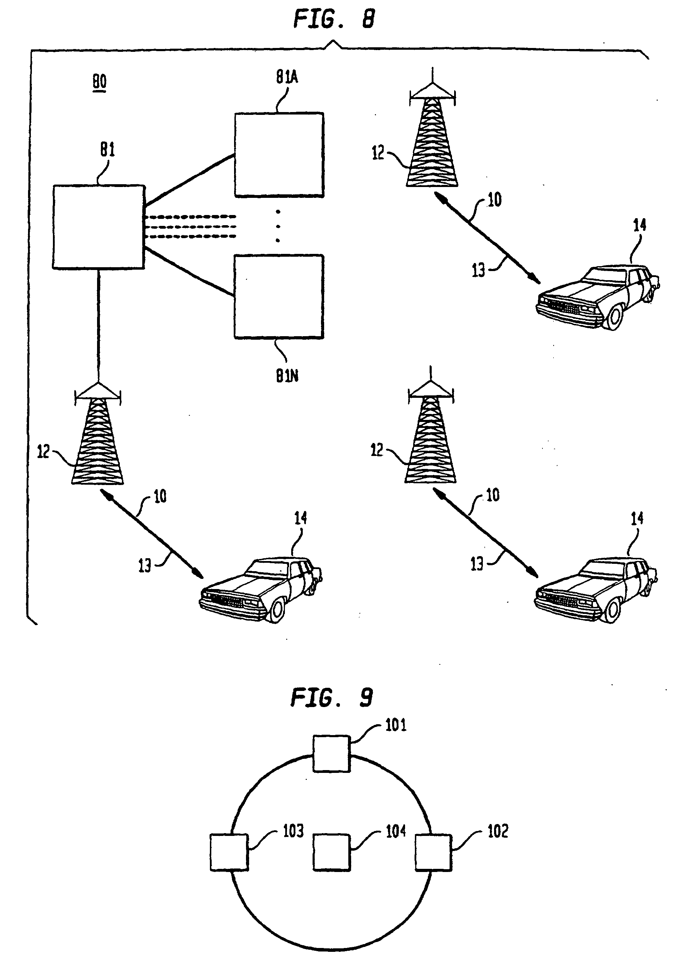

Fig. 8 is a schematic diagram of a system 80 for implementing the method for mobile location estimation. System 80 includes base station server 81. Base station server 81 can be a computer located at base station 12 or networked thereto. Base station server 81 communicates with base station 12 for requesting and receiving data related to range measurements of mobile station 14 and base station 12. Base station server 81 also collects information on range measurements between mobile station 14 and each of base stations 81A-81N. The information is reported to base station server 81 either by mobile station 14 or base station servers 81A-81N. The functions of modules shown in Figs. 4-6 which are coded with a standard programming language, such as $C^{++}$ programming language. The coded modules can be executed by base station server 81.

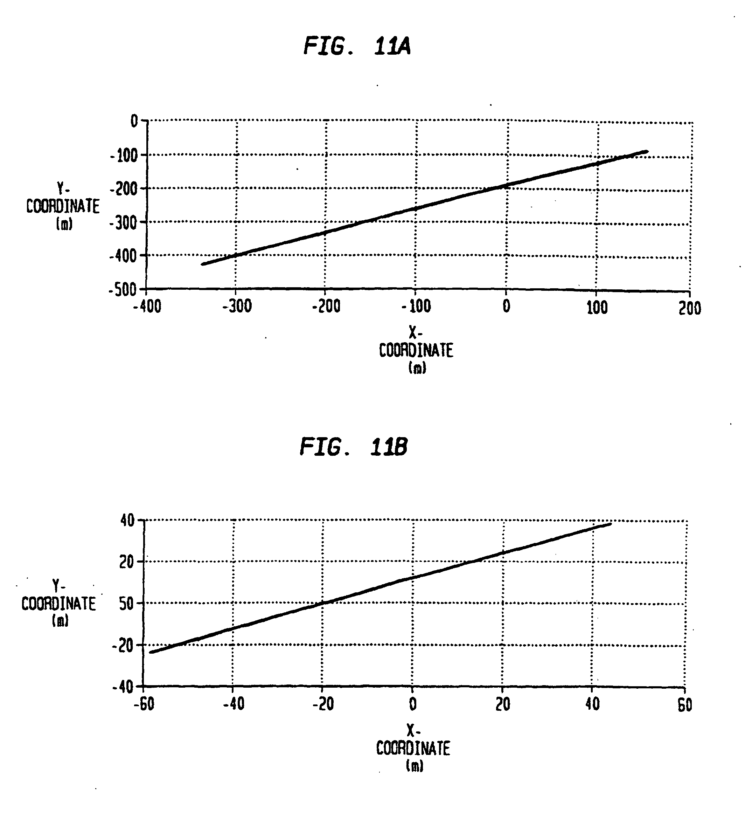

Results for examples of mobile location estimates with system 80 are shown in Tables I - IV and Fig. 9 through Fig. 12. In all of the examples, the vehicle's position in the x-y plane at any is given by:

$$x(t) = x_o + v_x t$$

$$y(t) = y_o + v_y t$$

$x(t)$ represents the $x$ - coordinate in $x$ - $y$ plane at time instant, t,
$y(t)$ represents the $y$ - coordinate in $x$ - $y$ plane at time instant, t,
$x_o$ represents the initial $x$ - coordinate,
$y_o$ represents the initial $y$ - coordinate,
$v_x$ represents the speed in $x$ - direction,
$v_y$ represents the speed in $y$ - direction.

The sampling period was chosen to be 0.5s and 200 samples were taken. The velocity remained constant at $v_x$ = 9.7 m/s and $v_y$ = 16.8 m/s. Base stations 12 were assigned to have NLOS or LOS range measurements. Standard deviation of the standard measurement noise was represented as a $\sigma_m$ was 150m and $B_m$ was chosen as 1300m. In each example three base stations 101, 102, 103 were used uniformly spaced around a circle of 5 kilometers and a fourth base station 104 was located at the center of the circle, as shown in Fig. 9.

In a first example, base station 101 and base station 102 provide NLOS range measurements and base stations 103 and base station 104 provide LOS range measurements. The standard deviation $\hat{\sigma}_m$ (m) of the smoothed curve determined in Fig. 4 is shown in Table 1.

TABLE 1

| STANDARD DEVIATION OF MEASUREMENTS FROM SMOOTHED CURVE FOR 2 NLOS MEASUREMENTS | | |
|---|---|---|
| Base | NLOS | $\hat{\sigma}_m$ (m) |
| 101 | Yes | 467.3 |
| 102 | Yes | 447.6 |
| 103 | No | 163.1 |
| 104 | No | 142.1 |

The results indicate base stations 101 and 102 have NLOS range measurements with a significantly larger standard deviation than base station 103 and base station 104 having a LOS range measurement.

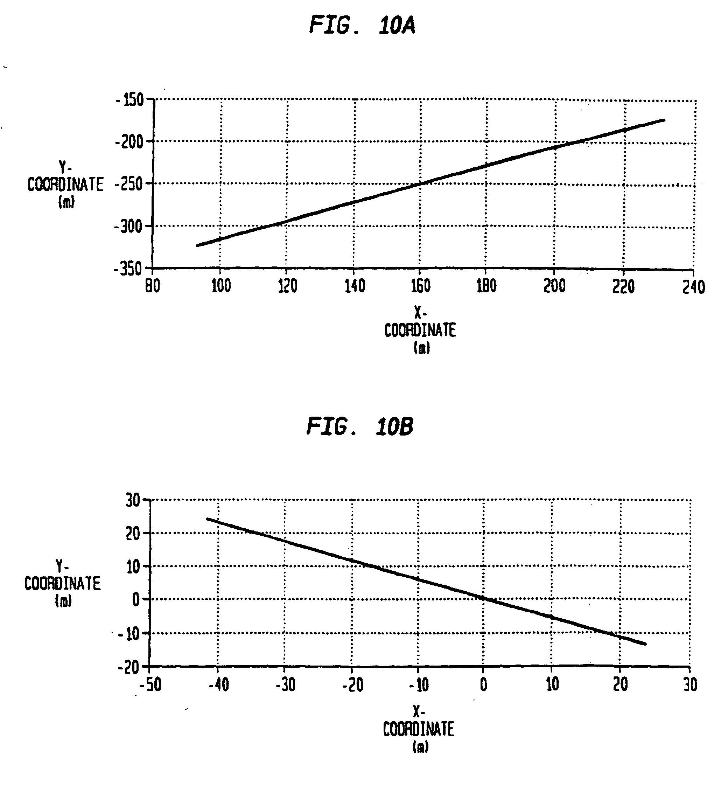

Fig. 10A shows two-dimensional tracking error without NLOS identification and correction Fig. 10B shows two dimensional tracking error after the method of mobile location estimation of the present invention is performed. The results indicate improvement of estimated vehicle trajectory after NLOS identification and correction.

In a second example, base stations 101, 102, 103 and 104 have NLOS range measurements. The standard deviation $\hat{\sigma}_m$ (m) of the smoothed curve determined in Fig. 4 is shown in Table 2.

TABLE 2

| STANDARD DEVIATION OF MEASUREMENTS FROM SMOOTHED CURVE FOR FOUR NLOS MEASUREMENTS | | |
|---|---|---|
| Base | NLOS | $\hat{\sigma}_m$ (m) |
| 101 | Yes | 440.2 |
| 102 | Yes | 444.4 |
| 103 | Yes | 463.6 |
| 104 | Yes | 450.2 |

The results indicate a similar standard deviation $\hat{\sigma}(m)$ for all four base stations 101, 102, 103 and 104 having NLOS.

In a third example, three results were determined using $x_o$ = -118.3m $y_o$ = -3.7m with the residual analysis tracking method shown in Fig. 5. In test 1, base station 104 was NLOS. In test 2, base station 103 and base station 104 are NLOS. In test 3, base station 102, base station 103 and base station 104 were non-line of sight. The number of times each base station had the largest absolute residual difference is shown in Table 3.

TABLE 3

| PERCENTAGE OF TIME BS HAD LARGEST RESIDUAL | | | | | |
|---|---|---|---|---|---|
| TEST | | BS101 | BS102 | BS103 | BS104 |
| 1 | LOS | 10 | 11 | 18.5 | |
| | NLOS | | | | 60 |
| 2 | LOS | 18.5 | 15 | | |
| | NLOS | | | 26.5 | 40 |
| 3 | LOS | 12.5 | | | |
| | NLOS | | 20 | 40.5 | 27 |

The results indicate NLOS base stations having larger percentages of residual differences.

In a fourth example, results of the method for location estimation at the present invention were compared with a conventional least square analysis, a least square analysis with all range measurements are line of sight and a conventional Cramer Rao Lower Bound analysis. The Cramer Rao Lower Bound represents a lower bound on the rms error of any unbiased estimator. Table 4 represents the present method shown in column 2, the conventional least squares analysis shown in column 1, a least square analysis with all measurements LOS in column 3 and the conventional Cramer Rao Lower Bound analysis shown in column 4. The location and speed errors in each coordinates were measured in meters and meters/second respectively.

| | |
|---|---|
| $\mu_{xo}$ = mean error in estimating $x_o$ | $\sigma_{xo}$ = standard deviation of $\hat{x}_o$ |
| $\mu_{yo}$ = mean error in estimating $y_o$ | $\sigma_{yo}$ = standard deviation of $\hat{y}_o$ |
| $\mu_{vx}$ = mean error in estimating $v_x$ | $\sigma_{vo}$ = standard deviation of $\hat{v}_x$ |
| $\mu_{vy}$ = mean error in estimating $v_y$ | $\sigma_{vy}$ = standard deviation of $\hat{v}_y$ |

TABLE 4

| COMPARISON OF ESTIMATOR PERFORMANCE | | | |
|---|---|---|---|
| | LEAST SQUARES PRIOR ART METHOD | METHOD OF PRESENT INVENTION | LOS | $\sqrt{CRLB}$ |
| $\mu_{xo}$ | 297.8 | -3.98 | 0.17 | -- |
| $\sigma_{xo}$ | 32.9 | 28.30 | 16.42 | 15.88 |
| $\mu_{yo}$ | -306.1 | -2.36 | 0.54 | -- |
| $\sigma_{yo}$ | 55.5 | 45.13 | 14.15 | 14.18 |
| $\mu_{vx}$ | 0.18 | -0.09 | -0.005 | -- |
| $\sigma_{vx}$ | 0.55 | 0.49 | 0.27 | 0.27 |
| $\mu_{vy}$ | 4.49 | -.01 | -0.005 | -- |
| $\sigma_{vv}$ | 0.84 | 0.64 | 0.25 | 0.25 |

The results indicate that the mobile location estimation method of the present invention significantly reduced the estimation bias as compared to results without NLOS error correction.

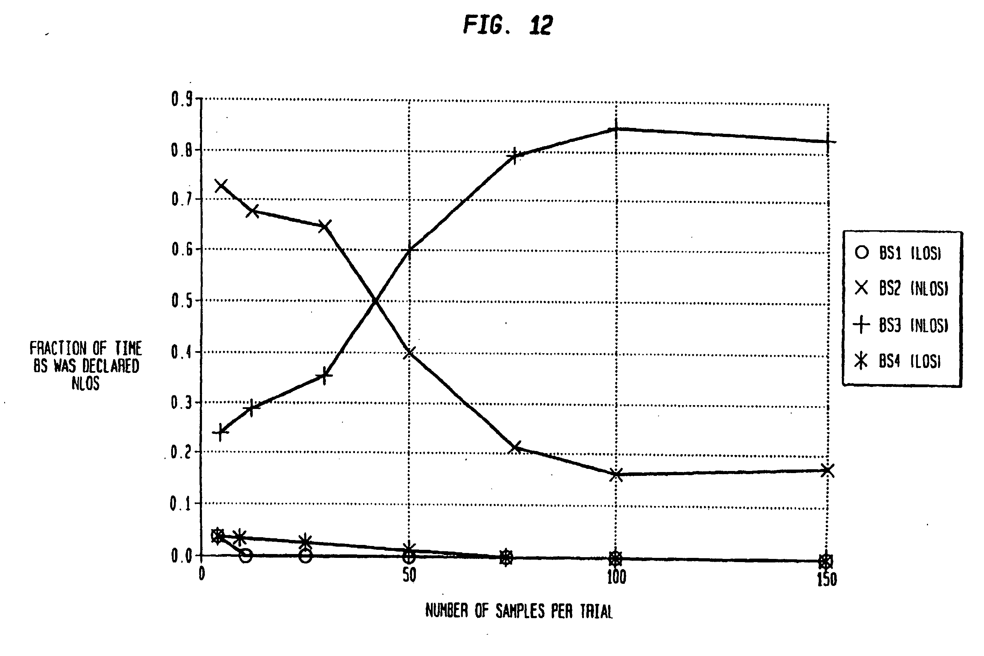

Fig. 12 is a comparison of the probability of detecting an NLOS range measurement. The sampling period was 0.5 seconds. The number of samples varied between 5 and 150. $X_o$ was 200m and $y_o$ was 100m. Base station 101 and base station 104 were LOS. Base station 102 and base station 103 were NLOS. The results indicate NLOS can be detected with high probability for a small number of samples.

It is to be understood that the above-described embodiments are illustrative of only a few of the many possible specific embodiments which can represent applications of the principles of the invention. Numerous and varied other arrangements can be readily devised in accordance with these principles by those skilled in the art without departing from the scope of the invention, as defined by the appended claims.

**Claims**

1. A method for mobile station location estimation comprising the steps of

a. obtaining range measurements between said mobile station and a base station;
b. identifying whether said base station is line of sight with said mobile station or non-line of sight with said mobile station at the time at which a mobile location estimate is made;
c. correcting non-line of sight range measurements for a base station identified as non-line of sight with said mobile station in step b to determine reconstructed line of sight range measurements;
d. repeating steps a through c for at least three said base stations; and
e. determining said mobile station location estimation from at least three said reconstructed line of sight range measurements determined in step c for an identified non-line of sight stations in step b, or at least three said range measurements determined in step a for an identified line of sight base station in step b, or at least three of the combination of said reconstructed line of sight range measurements determinded in step c for an identified non-line of sight station in step b and said range measurements determined in step a for an identified line of sight base station in step b, or
f. repeating steps a through c for at least two base stations and determining angle arrival information; and determining said mobile station location estimation from at least two said reconstructed line of sight range measurements determined in step c for identified non-line of sight stations in step b and said arrival information or at least two said range measurements determined in step a for an identified line of sight base station in step b and said angle arrival information.

2. The method of claim 1 wherein step b comprises the steps of:

obtaining line of sight range measurements between said mobile station and a base station without noise;
obtaining noisy line of sight range measurements between said mobile station and said base station;
predetermining a first standard deviation of the difference of said line of sight range measurements with said noisy line of sight range measurements,
smoothing said range measurements determined in step a;
determining a second standard deviation of the difference between said smoothed range measurements and said noisy line of sight range measurements; and
discriminating between said base station being line of sight or said base station being non-line of sight from said first standard deviation and said second standard deviation, wherein said base station is determined to be non-line of sight when said second standard deviation is greater than said first standard deviation and line of sight when said second standard deviation is on the order of said first standard deviation.

3. The method of claim 2 wherein the range measurement obtained in step a is represented by:

$$r_m\,(t_i) = L_m\,(t_i) + n_m\,(t_i) + NLOS_m\,(t_i)$$

for $m = 1, ..., M\ i = 0, ...\ K\text{-}1$, wherein

$L_m\,(t_i)$ is the LOS distance between a mobile station and the $m^{th}$ base station in two dimensions

which is given by:

$$L_m\,(t_i) = |x(t_i) + j * y(t_i) - x_m - j * y_m|;$$

$j = \sqrt{-1}$, $|\ |$ is absolute value,
$x(t_i)$, $y(t_i)$ and $(x_m, y_m)$ are respectively the coordinates of the mobile station at time, $t_i$, and those of the $m^{th}$ base station; $n_m\,(t_i)$ represents conventional measurement noise such as additive white Gaussian measurement noise and $NLOS_m\,(t_i)$ represents NLOS measurement error at time $t_i$; and $M$ is the total number of base stations; and $K$ is the total number of time samples.

4. The method of claim 3 where the range measurement is smoothed by modeling:

$$r_m(t_i) = \sum_{n=0}^{N-1} a_m(n) t_i^n$$

and solving for the unknown coefficients, $\{a_m(n)\}_{n=0}^{N-1}$ with a least squares technique.

5. The method of claim 4 wherein the second standard deviation is represented by

$$\hat{\sigma}_m = \sqrt{\frac{1}{K} \sum_{i=0}^{K-1} (s_m(t_i) - r_m(t_i))^2}$$

wherein

$$s_m(t_i) = \sum_{n=0}^{N-1} \hat{a}_m(n) t_i^n.$$

6. The method of claim 1 wherein step b comprises the steps of:

estimating coordinates of said mobile station from said range measurement obtained in step a over time;
calculating a range measurement from said estimated coordinates;
determining a residual from the difference of said range measurement obtained in step a and said calculated range measurement;
counting the number of times the residual is the greatest at each base station for each time instant; and
defining said base station as non-line of sight from the base station which has the greatest value of the number of times the greatest residual was counted.

7. The method of claim 6 wherein said estimated coordinates are represented by $\hat{x}_{LS}(t_i), \hat{y}_{LS}(t_i)$ at each instance of time $t_i$, said estimated coordinates are determined as least squares estimates to

$$F_i = \sum_{m=1}^{M} (r_m(t_i) - \hat{L}_m(t_i))^2$$

where

$$\hat{L}_m(t_i) = |\hat{x}(t_i) - x_m + j^* \hat{y}(ti) - j^* y_m|.$$

8. The method of claim 1 wherein step c comprises the steps of:

determining a value of maximum noise deviation and standard deviation from said range measurements obtained in step a and a predetermined line of sight range measurement with negligible noise;
smoothing said range measurements obtained from step a;
graphing a curve of said smoothed range measurements;
determining a point of maximum deviation of said range measurement below said curve;
displacing said curve downwards to pass through said point of maximum deviation; and
displacing said curve upwards by said value of said maximum noise deviation, thereby providing said reconstructed range measurement.

9. A system for mobile station location estimation comprising:

means for obtaining range measurements between said mobile station and plurality of base stations;
identifying means for identifying whether each of said base stations is line of sight with said mobile station as a line of sight base station or non-line of sight with said mobile station as a non-line of sight base station;
correcting means for correcting said range measurement for each of said non-line of sight base stations to determine a reconstructed line of sight range measurement;
optionally determining means for determining angle arrival information; and
estimating means for determining said mobile station location estimation from at least three of said reconstructed line of sight range measurements for said non-line of sight base station or at least three said range measurements for said line of sight base station, or at least three of the combination of said reconstructed line of sight range measurements for said non-line of sight base. station, and said range measurements for said line of sight base stations, or at least two of said reconstructed line of sight measurements for said non-line of sight base station and said angle arrival information or at least two said range measurements for said line of sight base station and said angle arrival information.

10. The system of claim 9, wherein said identifying means comprises: means for obtaining a line of sight range measurement without noise between said mobile station and each of said base station;

means for obtaining a noisy line of sight range measurement between said mobile station and each of said base station;
means for predetermining a first standard deviation of the difference of said line of sight range measurement with said noisy line of sight range measurements;
means for smoothing said range measurements;
means for determining a second standard deviation of the difference between said smoothed range measurements and said noisy line of sight range measurement; and
means for discriminating each of said base stations as being line of sight or being non-line of sight from said first standard deviation and said second standard deviation, wherein said base station is determined to be non-line of sight when said second standard deviation is significantly greater than said first standard deviation and line of sight when said second standard deviation is on the order of said first standard deviation.

11. The system of claim 10, wherein the range measurement is represented by:

$$r_m(t_i) = L_m(t_i) + n_m(t_i) + NLOS_m(t_i)$$

for $m = 1,..., M$ $i = 0,...K-1$, wherein $L_m(t_i)$ is the LOS distance between a mobile station and the $m^{th}$ base station in two dimensions which is given by:

$$L(t_i) = |x(t_i) + j * y(t_m) - x_m - j * y_m|;$$

$j = \sqrt{-1}$, $|\ |$ is absolute value,
$x(t_i)$, $y(t_i)$ and $(x_m, y_m)$ are respectively the coordinates of the mobile station at time, $t_i$, and those of the $m^{th}$ base station; $n_m(t_i)$ represents conventional measurement noise such as additive white Gaussian measurement noise and $NLOS_m(t_i)$ represents NLOS measurement error at time $t_i$; and M is the total number of base stations; and K is the total number of time samples.

12. The system of claim 11, where the range measurement is smoothed by modeling:

$$r_m(t_i) = \sum_{n=0}^{N-1} a_m(n) t_i^n$$

and solving for the unknown coeffcients, $\{a_m(n)\}_{n=0}^{N-1}$ with a least squares technique.

**13.** The system of claim 12, wherein the second standard deviation is represented by

$$\hat{\sigma}_m = \sqrt{\frac{1}{K}\sum_{i=0}^{K-1}(s_m(t_i)-r_m(t_i))^2}$$

wherein

$$s_m(t_i) = \sum_{n-0}^{N-1}\hat{a}_m(n)t_i^n.$$

**14.** The system of claim 10, wherein said identifying means comprises:

means for estimating coordinates of said mobile station from said range measurements from a plurality of base stations received over time;
means for calculating a calculated range measurement from said estimated coordinates;
means for determinig a residual from the difference of said range measurements and said calculated range measurement;
means for counting the number of times the residual is the greatest at each base station for each time instant; and
means for defining said base station as non-line of sight from the base station which has the greatest value of the number of times the greatest residual was counted.

**15.** The system of claim 12, wherein said estimated coordinates are represented by $\hat{x}_{LS}(t_i),\hat{y}_{LS}(t_i)$ at each instant of time $t_i$, said estimated coordinates are determined as least squares estimates to

$$F_i = \sum_{m-1}^{M}(r_m(t_i)-\hat{L}_m(t_i))^2$$

where

$$\hat{L}_m(t_i) = |\hat{x}(t_i)-x_m+j^*\hat{y}(t_i)-j^*y_m|.$$

**16.** The system of claim 10, wherein said estimating means comprises:

means for determining a value of maximum noise deviation and standard deviation for each of said range measurements and a predetermined line of sight range measurement with negligible noise;
mans for smoothing said range measurements;
means for graphing a curve of said smoothed range measurements;
means for determining a point of maximum deviation of said range measurements below said curve;
means for displacing said curve downwards to pass through said point of maximum deviation; and
means for displacing said curve upwards by said value of said maximum noise deviation, thereby providing said reconstructed range measurement.

**Patentansprüche**

1. Verfahren zur Einschätzung der Lage einer mobilen Station, mit den folgenden Schritten:

   a. Herleitung von Bereichsmessungen zwischen der mobilen Station und einer Basisstation;

   b. Identifizieren ob die Basisstation in einer Sichtlinie mit der mobilen Station liegt oder in einer Nicht-Sichtlinie mit der mobilen Station liegt zu dem Zeitpunkt, zu welchem eine Schätzung einer mobilen Örtlichkeit durchgeführt wird;

   c. Korrigieren von Nicht-Sichtlinien-Bereich-Messungen für eine Basisstation, die als nicht in einer Sichtlinie mit der mobilen Station bei dem Schritt b identifiziert wurde, um rekonstruierte Sichtlinien-Bereichsmessungen festzulegen;

   d. Wiederholen der Schritte a bis c für wenigstens drei Basisstationen; und

   e. Bestimmen der Schätzung der Örtlichkeit der mobilen Station aus wenigstens drei der rekonstruierten Sichtlinien-Bereichsmessungen, die bei dem Schritt c festgelegt wurden für eine identifizierte nicht auf Sichtlinie liegende Station entsprechend Schritt b, oder aus wenigstens drei der Bereichsmessungen, die bei dem Schritt a bestimmt wurden, für eine identifizierte Sichtlinien-Basisstation bei dem Schritt b, oder von wenigstens drei der Kombination der rekonstruierten Sichtlinienbereich-Messungen, die bei dem Schritt c bestimmt wurden und zwar für eine identifizierte Nicht-Sichtlinien-Station bei dem Schritt b und den Bereichsmessungen, die bei dem Schritt a bestimmt wurden und zwar für eine identifizierte Sichtlinien-Basisstation gemäß dem Schritt b, oder

   f. Wiederholen der Schritte a bis c für wenigstens zwei Basisstationen und Bestimmen von Winkel-Ankunftsinformationen; und
   Bestimmen der Schätzung der Örtlichkeit der mobilen Station anhand von wenigstens zwei der rekonstruierten Sichtlinienbereich-Messungen, die bei dem Schritt c bestimmt wurden, für identifizierte Nicht-Sichtlinien-Stationen gemäß dem Schritt b und der Ankunftsinformationen, oder von wenigstens zwei der Bereichsmessungen, die bei dem Schritt a bestimmt wurden und zwar für eine identifizierte Sichtlinien-Basisstation gemäß dem Schritt b und anhand der Winkel-Ankunftsinformationen.

2. Verfahren nach Anspruch 1, bei welchem der Schritt b die folgenden Schritte umfaßt:

   Ableiten der Sichtlinien-Bereichsmessungen zwischen der mobilen Station und einer Basisstation ohne Störsignale;

   Ableiten von mit Störsignalen behafteten Sichtlinien-Bereichsmessungen zwischen der mobilen Station und der Basisstation;

   Bestimmen einer ersten Standardabweichung der Differenz der Sichtlinien-Bereichsmessung mit den mit Störsignalen behafteten Sichtlinien-Bereichsmessungen,

   Glätten der Bereichmessungen, die bei dem Schritt a bestimmt wurden;

   Bestimmen einer zweiten Standardabweichung der Differenz zwischen den geglätteten Bereichmessungen und den mit Störsignalen behafteten Sichtlinien-Bereichsmessungen; und

   Diskriminieren zwischen der Basisstation, die in Sichtlinie liegt oder der Basisstation, die nicht in Sichtlinie liegt, von der ersten Standardabweichung und der zweiten Standardabweichung, wobei die Basisstation als nicht auf Sichtlinie liegend bestimmt wird, wenn die zweite Standardabweichung größer ist als die erste Standardabweichung, und als auf Sichtlinie liegend bestimmt wird, wenn die zweite Standardabweichung in der Größenordnung der ersten Standardabweichung liegt.

3. Verfahren nach Anspruch 2, bei dem die bei dem Schritt a erhaltene Bereichsmessung dem folgenden Ausdruck entspricht:

$$r_m(t_i) = L_m(t_i) + n_m(t_i) + NLOS_m(t_i)$$

worin gilt:

m = 1,...,M i = 0,...K-1, worin

$L_m(t_1)$ der LOS Abstand zwischen einer mobilen Station und der m-ten Basisstation in zwei Dimensionen ist und gegeben ist als:

$$L_m(t_i) = |x(t_i) + j * y(t_i) - x_m - j * y_m|;$$

$j = \sqrt{-1}$, | | der Absolutwert ist,

$x(t_i)$, $y(t_i)$ und $(x_m, y_m)$ jeweils Koordinaten der mobilen Station zu dem Zeitpunkt $t_i$ bedeuten und diejenigen der m-ten Basisstation; $n_m(t_i)$ die herkömmlichen Meßstörsignale repräsentiert wie beispielsweise additives weißes Gaußsches Meßrauschen und $NLOS_m(t_i)$ einen NLOS Meßfehler zum Zeitpunkt $t_i$ repräsentiert, und M die Gesamtzahl der Basisstationen angibt; und K die Gesamtzahl der Zeit-Proben ist.

4. Verfahren nach Anspruch 3, bei dem die Bereichsmessung durch Modellbildung geglättet wird entsprechend:

$$\dot{r}_m(t_i) = \sum_{n=0}^{N-1} \bar{a}_m(n) t_i^n$$

wobei eine Auflösung hinsichtlich unbekannter Koeffizienten mit Hilfe einer $\{a_m(n)\}_{n=0}^{N-1}$ Fehlerquadrattechnik erfolgt.

5. Verfahren nach Anspruch 4, bei dem die zweite Standardabweichung der folgenden Formel entspricht:

$$\hat{\sigma}_m = \sqrt{\frac{1}{K} \sum_{i=0}^{K-1} (s_m(t_i) - r_m(t_i))^2}$$

worin:

$$s_m(t_i) = \sum_{n=0}^{N-1} \hat{a}_m(n) t_i^n.$$

bedeutet.

6. Verfahren nach Anspruch 1, bei welchem der Schritt b die folgenden Schritte umfaßt:

Schätzen von Koordinaten der mobilen Station aus der Bereichsmessung, die bei dem Schritt a erhalten wurde, über die Zeit;

Berechnen einer Bereichsmessung aus den geschätzten Koordinaten;

Bestimmen eines Restes aus der Differenz zwischen der Bereichsmessung, die bei dem Schritt a erhalten wurde, und der berechneten Bereichsmessung;

Zählen der Anzahl von Malen, die der Rest an jeder Basisstation am größten ist und zwar für jeden Zeitpunkt; und

Festlegen der Basisstation als nicht auf Sichtlinie liegend anhand der Basisstation, die den größten Wert der Anzahl von Malen besitzt, die der größte Rest gezählt wurde.

**7.** Verfahren nach Anspruch 6, bei dem die geschätzten Koordinaten durch $\hat{x}_{LS}(t_i), \hat{y}_{LS}(t_i)$ zu jedem Zeitpunkt $t_i$ wiedergegeben werden, wobei die geschätzten Koordinaten als Schätzungen von Fehlerquadraten bestimmt werden gemäß:

$$F_i = \sum_{m-1}^{M} (r_m(t_i) - \hat{L}_m(t_i))^2$$

worin:

$$\hat{L}_m(t_i) = |\hat{x}(t_i) - x_m + j^*\hat{y}(t_i) - j^*y_m|$$

**8.** Verfahren nach Anspruch 1, bei welchem der Schritt c die folgenden Schritte umfaßt:

Brestimmen eines Wertes der maximalen Störsignalabweichung und der Standardabweichung von den Bereichsmessungen, die bei dem Schritt a erhalten wurden, und einer vorbestimmten Sichtlinien-Bereichsmessung mit vemachlässigbaren Störsignalen;

Glätten der bei dem Schritt a erhaltenen Bereichsmessungen;

graphisches Auftragen einer Kurve der geglätteten Bereichsmessungen;

Bestimmen eines Punktes einer maximalen Abweichung der Bereichsmessung unter der Kurve;

Verschieben oder Versetzen der Kurve nach unten hin, so daß sie durch den Punkt der maximalen Abweichung verläuft; und

Verschieben oder Versetzen der Kurve nach oben hin um den Wert der maximalen Störsignalabweichung, um dadurch die Bereichsmessung vorzusehen und zu rekonstruieren.

**9.** System zum Schätzen der Örtlichkeit einer mobilen Station, mit:

einer Einrichtung zum Ableiten von Bereichsmessungen zwischen der mobilen Station und einer Vielzahl von Basisstationen;

einer Identifiziereinrichtung, um eine Identifizierung dahingehend durchzuführen, ob jede der Basisstationen auf Sichtlinie mit der mobilen Station liegt, um sie als Sichtlinien-Basisstation oder Nicht-Sichtlinien-Basisstation in Bezug auf die mobile Station einzustufen;

einer Korrigiereinrichtung zum Korrigieren der Bereichsmessung für jede der nicht auf Sichtlinie liegenden Basisstation, um eine rekonstruierte Sichtlinien-Bereichsmessung zu bestimmen;

einer optionalen Bestimmungseinrichtung zum Bestimmen von Winkelankunftsinformationen; und

einer Schätzeinrichtung zum Festlegen der Schätzung der Örtlichkeit der mobilen Station anhand von wenigstens drei der rekonstruierten Sichtlinien-Bereichsmessungen für die nicht auf Sichtlinie liegende Basisstation, oder anhand von wenigstens drei der Bereichsmessungen für die Sichtlinien-Basisstation oder anhand von wenigstens drei einer Kombination der rekonstruierten Sichtlinien-Bereichsmessungen für die Nicht-Sichtlinien-Basisstation, und den Bereichsmessungen für die Sichtlinien-Basisstationen, oder anhand von wenigstens zwei der rekonstruierten Sichtlinien-Messungen für die Nicht-Sichtlinien-Basisstation und den Winkelankunftsinformationen, oder anhand von wenigstens zwei der Bereichsmessungen für die Sichtlinien-Basisstation und den Winkelankunftsinformationen.

**10.** System nach Anspruch 9, bei dem die Identifiziereinrichtung folgendes aufweist:

eine Einrichtung zum Ableiten einer Sichtlinien-Bereichsmessung ohne Störsignale zwischen der mobilen Station und jeder der Basisstationen;

eine Einrichtung zum Ableiten einer Störsignal behafteten Sichtlinien-Bereichsmessung zwischen der mobilen Station und jeder der Basisstationen;

eine Einrichtung zum Bestimmen einer ersten Standardabweichung entsprechend der Differenz der Sichtlinien-Bereichsmessung von der mit Störsignalen behafteten Sichtlinien-Bereichsmessung;

eine Einrichtung zum Glätten der Bereichsmessungen;

eine Einrichtung, um eine zweite Standardabweichung entsprechend der Differenz zwischen den geglätteten Bereichsmessungen und der mit Störsignalen behafteten Sichtlinien-Bereichsmessung zu bestimmen; und

eine Einrichtung zur Durchführung einer Diskriminierung bei jeder der Basisstationen als Sichtlinien- oder Nicht-Sichtlinienstation von der ersten Standardabweichung und von der zweiten Standardabweichung, wobei die Basisstation als nicht auf Sichtlinie liegende Station definiert wird, wenn die zweite Standardabweichung in signifikanter Weise größer ist als die erste Standardabweichung, und als auf Sichtlinie liegende Station definiert wird, wenn die zweite Standardabweichung in der Größenordnung der ersten Standardabweichung liegt.

**11.** System nach Anspruch 10, bei dem die Bereichsmessung wiedergegeben ist durch:

$$r_m(t_i) = L_m(t_i) + n_m(t_i) + NLOS_m(t_i),$$

wobei gesetzt wird für
$m = 1 ...,M$ $i = 0,...K-1$, und wobei $L_m(t_i)$ der LOS Abstand zwischen einer mobilen Station und der m-ten Basisstation in zwei Dimensionen ist und gegeben ist durch:

$$L(t_i) = |x(t_i) + j^* y(t_m)-x_m-j^*y_m|;$$

wobei
$j = \sqrt{-1}$ $|\ |$ der Absolutwert ist,
$x(t_i)$, $y(t_i)$ und $(x_m, y_m)$ jeweils die Koordinaten der mobilen Station zum Zeitpunkt $t_i$ bedeuten und diejenigen der m-ten Basisstation; $n_m(t_i)$ herkömmliche Meßstörsignale wiedergibt wie beispielsweise additives weißes Gaußsches Meßrauschen, und $NLOS_m(t_i)$ den NLOS Meßfehler zum Zeitpunkt $t_i$ angibt; und N die Gesamtzahl der Basisstationen ist; und K die Gesamtzahl der Zeitproben ist.

**12.** System nach Anspruch 11, bei dem die Bereichsmessung durch Modellbildung geglättet wird gemäß:

$$r_m = (t_i) = \sum_{n=0}^{N-1} a_m(n)t_i^n$$

und eine Auflösung nach unbekannten Koeffizienten erfolgt mit einer $\{a_m(n)\}^{N-1}_{n=0}$ Fehlerquadrattechnik.

**13.** System nach Anspruch 12, bei dem die zweite Standardabweichung wiedergegeben wird durch

$$\hat{\sigma}_m = \sqrt{\frac{1}{K} \sum_{i=0}^{K-1} (s_m(t_i) - r_m(t_i))^2}$$

worin:

$$s_m(t_i) = \sum_{n=0}^{N-1} \hat{a}_m(n) t_i^n$$

bedeutet.

**14.** System nach Anspruch 10, bei dem die Identifiziereinrichtung folgendes aufweist:

eine Einrichtung zum Schätzen der Koordinaten der mobilen Station aus Bereichsmessungen von einer Vielzahl von Basisstationen, die über die Zeit empfangen werden;

eine Einrichtung zum Berechnen einer berechneten Bereichsmessung aus den geschätzten Koordinaten;

eine Einrichtung zum Bestimmen eines Restes aus der Differenz der Bereichsmessungen und der berechneten Bereichsmessung;

eine Einrichtung zum Zählen der Anzahl von Malen, die der Rest am größten ist und zwar bei jeder Basisstation für jeden Zeitpunkt; und

eine Einrichtung zum Definieren der Basisstation als nicht auf Sichtlinie liegend von der Basisstation, die den größten Wert der Anzahl von Malen hat, die der größte Rest gezählt wurde.

**15.** System nach Anspruch 12, bei dem die geschätzten Koordinaten wiedergegeben werden durch $\hat{x}_{LS}(t_i), \hat{y}_{LS}(t_i)$ zu jedem Moment der Zeit t;, wobei die geschätzten Koordinaten als Fehlerquadrat-Schätzungen bestimmt werden entsprechend

$$F_i = \sum_{m-1}^{M} (r_m(t_i) - \hat{L}_m(t_i))^2$$

worin bedeutet:

$$\hat{L}_m(t_i) = |\hat{x}(t_i) - x_m + j * \hat{y}(t_i) - j * y_m|.$$

**16.** System nach Anspruch 10, bei dem die Schätzeinrichtung folgendes enthält:

eine Einrichtung zum Bestimmen eines Wertes der maximalen Störsignalabweichung und einer Standardabweichung für jede der Bereichsmessungen und für eine vorbestimmte Sichtlinien-Bereichsmessung mit vernachlässigbaren Störsignalen;

eine Einrichtung zum Glätten der Bereichsmessungen;

eine Einrichtung zum Auftragen einer Kurve der geglätteten Bereichsmessungen;

eine Einrichtung zum Bestimmen eines Punktes einer maximalen Abweichung der Bereichsmessungen unter der Kurve;

eine Einrichtung zum Verschieben oder Versetzen der Kurve nach unten hin, so daß sie durch den Punkt der maximalen Abweichung verläuft; und

eine Einrichtung zum Verschieben oder zum Versetzen der Kurve nach oben hin um einen Wert gemäß der maximalen Störsignalabweichung, so daß dadurch eine rekonstruierte Bereichsmessung erzeugt wird.

**Revendications**

1.  Procédé d'estimation de l'emplacement d'une station mobile, comprenant les étapes consistant à :

    a) obtenir des mesures de portée entre ladite station mobile et une station de base ;
    b) identifier si ladite station de base est en visibilité directe de ladite station mobile ou hors visibilité directe de ladite station mobile au moment où une estimation de l'emplacement du mobile est effectuée ;
    c) corriger des mesures de portée hors visibilité directe pour une station de base identifiée comme étant hors visibilité directe de ladite station mobile à l'étape b pour déterminer des mesures de portée en visibilité directe reconstituées ;
    d) répéter les étapes a à c pour au moins trois desdites stations de base ; et
    e) déterminer l'estimation de l'emplacement de ladite station mobile à partir d'au moins trois desdites mesures de portée en visibilité directe reconstituées déterminées à l'étape c pour une station hors visibilité directe identifiée à l'étape b, ou d'au moins trois desdites mesures de portée déterminées à l'étape a pour une station de base en visibilité directe identifiée à l'étape b, ou d'au moins trois éléments parmi la combinaison desdites mesures de portée en visibilité directe reconstituées déterminées à l'étape c pour une station hors visibilité directe identifiée à l'étape b et lesdites mesures de portée déterminées à l'étape a pour une station de base en visibilité directe identifiée à l'étape b, ou
    f) répéter les étapes a à c pour au moins deux stations de base et déterminer des informations d'arrivée d'angle ; et

    déterminer ladite estimation de l'emplacement d'une station mobile à partir d'au moins deux desdites mesures de portée en visibilité directe reconstituées déterminées à l'étape c pour des stations hors visibilité directe identifiées à l'étape b et desdites informations d'arrivée ou desdites au moins deux mesures de portée déterminées à l'étape a pour une station de base en visibilité directe identifiée à l'étape b et desdites informations d'arrivée d'angle.

2.  Procédé selon la revendication 1, dans lequel l'étape b comprend les étapes consistant à :

    (i) obtenir des mesures de portée en visibilité directe entre ladite station mobile et une station de base sans bruit ;
    (ii) obtenir des mesures de portée en visibilité directe bruyantes entre ladite station mobile et ladite station de base ;
    (iii) prédéterminer un premier écart-type de la différence desdites mesures de portée en visibilité directe par rapport auxdites mesures de portée en visibilité directe bruyantes ;
    (iv) lisser lesdites mesures de portée déterminées à l'étape a ;
    (v) déterminer un deuxième écart-type de la différence entre lesdites mesures de portée lissées et lesdites mesures de portée en visibilité directe bruyantes ; et
    (vi) distinguer entre ladite station de base en visibilité directe ou ladite station de base hors visibilité directe à partir dudit premier écart-type et dudit deuxième écart-type, dans lequel ladite station de base est déterminée comme étant hors visibilité directe lorsque ledit deuxième écart-type est supérieur audit premier écart-type et comme étant en visibilité directe lorsque ledit deuxième écart-type est de l'ordre dudit premier écart-type.

3.  Procédé selon la revendication 2, dans lequel la mesure de portée obtenue à l'étape a est représentée par :

$$r_m(t_i) = L_m(t_i) + n_m(t_i) + NLOS_m(t_i)$$

pour m = 1, ..., M i = 0, ... K-1, où
$L_m(t_i)$ est la distance LOS [en visibilité directe] entre une station mobile et la m-ième station de base dans deux dimensions, qui est donnée par :

$$L_m(t_i) = |x(t_i) + j * y(t_i) - x_m - j * y_m| \; ;$$

$j = -1$, $||$ est une valeur absolue,

$x(t_i)$, $y(t_i)$ et $(x_m, y_m)$ sont respectivement les coordonnées de la station mobile à l'instant $t_i$ et celles de la m-ième station de base ; $n_m(t_i)$ représente du bruit de mesure conventionnel comme un bruit de mesure gaussien blanc additif, et $NLOS_m(t_i)$ représente une erreur de mesure NLOS [hors visibilité directe] à l'instant $t_i$ ; et M est le nombre total de stations de base ; et K est le nombre total d'échantillons de temps.

**4.** Procédé selon la revendication 3, dans lequel la mesure de portée est lissée en modélisant :

$$r_m(t_i) = \sum_{n=0}^{N-1} \alpha_m(n) t_i^n$$

et en convertissant pour les coefficients inconnus $\{\alpha_m(n)\}_{m=0}^{N-1}$ avec une méthode des moindres carrés.

**5.** Procédé selon la revendication 4, dans lequel le deuxième écart-type est représenté par

$$\hat{\sigma}_m = \sqrt{\frac{1}{K} \sum_{i=0}^{K-i} (S_m(t_i) - r_m(t_i))^2}$$

où

$$S_m(t_i) = \sum_{n=0}^{N-1} \hat{\alpha}_m(n) t_i^n \; .$$

**6.** Procédé selon la revendication 1, dans lequel l'étape b comprend les étapes consistant à :

estimer les coordonnées de ladite station mobile à partir de ladite mesure de portée obtenue à l'étape a dans le temps ;

calculer une mesure de portée à partir desdites coordonnées estimées ;

déterminer un résidu à partir de la différence de ladite mesure de portée obtenue à l'étape a et de ladite mesure de portée calculée ;

compter le nombre de fois que le résidu est le plus grand à chaque station de base pour chaque instant temporel ; et

définir ladite station de base comme étant hors visibilité directe de la station de base qui a la plus grande valeur du nombre de fois que le plus grand résidu a été compté.

**7.** Procédé selon la revendication 6, dans lequel lesdites coordonnées estimées sont représentées par $\hat{x}_{LS}(t_i)$, $\hat{y}_{LS}$ * $(t_i)$ à chaque instant de temps $t_i$, lesdites coordonnées estimées sont déterminées comme des estimations par les moindres carrés à

$$F_i = \sum_{m=j}^{M} \left( r_m(t_i) - \hat{L}_m(t_i) \right)^2$$

où

$$\overset{\wedge}{L}_m(t_i) = |\overset{\wedge}{x}(t_i) - x_m + j * \overset{\wedge}{y}(t_i) - j * y_m|.$$

8. Procédé selon la revendication 1, dans lequel l'étape c comprend les étapes consistant à :

    déterminer une valeur de l'écart de bruit maximal et de l'écart-type à partir desdites mesures de portée obtenues à l'étape a et d'une mesure de portée en visibilité directe prédéterminée avec du bruit négligeable ;
    lisser lesdites mesures de portée obtenues de l'étape a ;
    dessiner une courbe desdites mesures de portée lissées ;
    déterminer un point d'écart maximal de ladite mesure de portée sous ladite courbe ;
    déplacer ladite courbe vers le bas pour passer par ledit point d'écart maximal ; et
    déplacer ladite courbe vers le haut de ladite valeur dudit écart de bruit maximal, de manière à prévoir ladite mesure de portée reconstituée.

9. Système pour une estimation de l'emplacement d'une station mobile, comprenant :

    des moyens permettant d'obtenir des mesures de portée entre ladite station mobile et une pluralité de stations de base ;
    des moyens d'identification permettant d'identifier si chacune desdites stations de base est en visibilité directe de ladite station mobile comme une station de base en visibilité directe ou hors visibilité directe de ladite station mobile comme une station de base hors visibilité directe ;
    des moyens de correction permettant de corriger ladite mesure de portée pour chacune desdites stations de base hors visibilité directe pour déterminer une mesure de portée en visibilité directe reconstituée ;
    en option des moyens de détermination permettant de déterminer des informations d'arrivée d'angle ; et
    des moyens d'estimation permettant de déterminer ladite estimation de l'emplacement d'une station mobile à partir d'au moins trois desdites mesures de portée en visibilité directe reconstituées pour ladite station de base hors visibilité directe, ou d'au moins trois desdites mesures de portée pour ladite station de base en visibilité directe, ou d'au moins trois éléments parmi la combinaison desdites mesures de portée en visibilité directe reconstituées pour ladite station de base hors visibilité directe et lesdites mesures de portée pour desdites stations de base en visibilité directe ou au moins deux desdites mesures en visibilité directe reconstituées pour ladite station de base hors visibilité directe et desdites informations d'arrivée d'angle ou au moins deux desdites mesures de portée pour ladite station de base en visibilité directe et desdites informations d'arrivée d'angle.

10. Système selon la revendication 9, dans lequel lesdits moyens d'identification comprennent: des moyens permettant d'obtenir une mesure de portée en visibilité directe sans bruit entre ladite station mobile et chacune desdites stations de base ;

    des moyens permettant d'obtenir une mesure de portée en visibilité directe bruyante entre ladite station mobile et chacune desdites stations de base ;
    des moyens permettant de prédéterminer un premier écart-type de la différence de ladite mesure en visibilité directe par rapport auxdites mesures de portée en visibilité directe bruyantes ;
    des moyens permettant de lisser lesdites mesures de portée ;
    des moyens permettant de déterminer un deuxième écart-type de la différence entre lesdites mesures de portée lissées et ladite mesure de portée en visibilité directe bruyante ; et
    des moyens permettant de distinguer chacune desdites stations de base comme étant en visibilité directe ou hors visibilité directe à partir dudit premier écart-type et dudit deuxième écart-type, dans lequel ladite station de base est déterminée comme étant hors visibilité directe lorsque ledit deuxième écart-type est nettement supérieur audit premier écart-type et comme étant en visibilité directe lorsque ledit deuxième écart-type est de l'ordre dudit premier écart-type.

11. Système selon la revendication 10, dans lequel la mesure de portée est représentée par :

$$r_m(t_i) = L_m(t_i) + n_m(t_i) + NLOS_m(t_i)$$

pour m = 1, ..., M i = 0, ... K-1, où $L_m(t_i)$ est la distance LOS entre une station mobile et la m-ième station de base dans deux dimensions, qui est donnée par :

$$L_m(t_i) = |x(t_i) + j * y(t_m) - x_m - j * y_m| \; ;$$

$j = -1$, $|\ |$ est une valeur absolue,

$x(t_i)$, $y(t_i)$ et $(x_m, y_m)$ sont respectivement les coordonnées de la station mobile à l'instant $t_i$ et celles de la m-ième station de base ; $n_m(t_i)$ représenté du bruit de mesure conventionnel comme un bruit de mesure gaussien blanc additif, et $NLOS_m(t_i)$ représente une erreur de mesure NLOS à l'instant $t_i$ ; et M est le nombre total de stations de base ; et K est le nombre total d'échantillons de temps.

**12.** Système selon la revendication 11, dans lequel la mesure de portée est lissée en modélisant :

$$r_m(t_i) = \sum_{n=0}^{N-1} \alpha_m(n) t_i^n$$

et en convertissant pour les coefficients inconnus $\{\alpha_m(n)\}^{N-1}_{n=0}$ avec une méthode des moindres carrés.

**13.** Système selon la revendication 12, dans lequel le deuxième écart-type est représenté par

$$\hat{\sigma}_m = \sqrt{\frac{1}{K} \sum_{i=0}^{K-i} \left(S_m(t_i) - r_m(t_i)\right)^2}$$

où

$$S_m(t_i) = \sum_{n=0}^{N=1} \hat{\alpha}_m(n) t_i^n$$

**14.** Système selon la revendication 10, dans lequel lesdits moyens d'identification comprennent :

des moyens permettant d'estimer les coordonnées de ladite station mobile à partir desdites mesures de portée provenant d'une pluralité de stations de base reçues dans le temps ;
des moyens permettant de calculer une mesure de portée calculée à partir desdites coordonnées estimées ;
dès moyens permettant de déterminer un résidu à partir de la différence desdites mesures de portée et de ladite mesure de portée calculée ;
des moyens permettant de compter le nombre de fois que le résidu est le plus grand à chaque station de base pour chaque instant temporel ; et
des moyens permettant de définir ladite station de base comme étant hors visibilité directe de la station de base qui a la plus grande valeur du nombre de fois que le plus grand résidu a été compte.

**15.** Système selon la revendication 12, dans lequel lesdites coordonnées estimées sont représentées par $\hat{x}_{LS}(t_i)$, $\hat{y}_{LS}$ * $(t_i)$ à chaque instant de temps $t_i$, lesdites coordonnées estimées sont déterminées comme des estimations par les moindres carrés à

$$F_i = \sum_{m=j}^{M} \left(r_m(t_i) - \hat{L}_m(t_i)\right)^2$$

où

$$\hat{L}_m(t_i) = |\hat{x}(t_i) - x_m + j * \hat{y}(t_i) - j * y_m|.$$

16. Système selon la revendication 10, dans lequel lesdits moyens d'estimation comprennent :

des moyens permettant de déterminer une valeur de l'écart de bruit maximal et de l'écart-type pour chacune desdites mesures de portée et une mesure de portée en visibilité directe prédéterminée avec du bruit négligeable ;
des moyens permettant de lisser lesdites mesures de portée ;
des moyens permettant de dessiner une courbe desdites mesures de portée lissées ;
des moyens permettant de déterminer un point d'écart maximal desdites mesures de portée sous ladite courbe ;
des moyens permettant de déplacer ladite courbe vers le bas pour passer par ledit point d'écart maximal ; et
des moyens permettant de déplacer ladite courbe vers le haut de ladite valeur dudit écart de bruit maximal, de manière à prévoir ladite mesure de portée reconstituée.

# FIG. 1A

# FIG. 1B

## FIG. 2

OBTAIN RANGE MEASUREMENTS — 21

FOR 1...M

IDENTIFY IF BASE STATION IS LOS OR NLOS — 22

NLOS

LOS

24 — CORRECT NLOS RANGE MEASUREMENT TO RECONSTRUCT AS AN LOS

RECONSTRUCTED LOS

26 — DETERMINE MOBILE LOCATION ESTIMATION

## FIG. 3

BS1 — 12

LOS RANGE 1

14

BS2 — 12

LOS RANGE 2

15

BS3 — 13

RECONSTRUCTED RANGE 3

NLOS RANGE 3

## FIG. 4

OBTAIN LOS RANGE MEASUREMENT BETWEEN BASE STATION AND MOBILE STATION — 30

OBTAIN NOISY LOS RANGE MEASUREMENT BETWEEN BASE STATION AND MOBILE STATION — 31

PREDETERMINE STANDARD DEVIATION AND MAXIMUM DEVIATION OF LOS RANGE MEASUREMENT WITH NOISY LOS RANGE MEASUREMENT — 32

22

SMOOTH RANGE MEASUREMENT OBTAINED FROM BLOCK 21 — 33

DETERMINE STANDARD DEVIATION OF THE DIFFERENCE BETWEEN SMOOTHED RANGE MEASUREMENT AND NOISY RANGE MEASUREMENT (i.e., STANDARD DEVIATION OF RESIDUAL) — 34

FROM VALUE OF STANDARD DEVIATION FROM BLOCK 32 AND STANDARD DEVIATION FROM BLOCK 34 DISCRIMINATE BETWEEN LOS OR NLOS RANGE MEASUREMENTS — 36

## FIG. 5 — 22

OBTAIN RANGE MEASUREMENTS BETWEEN MOBILE AND BASE STATION — 30

USE ALL RANGE MEASUREMENTS TO ESTIMATE MOBILE STATION COORDINATES OVER TIME — 40

CALCULATE A RANGE FROM ESTIMATED COORDINATES AND KNOWN BASE STATION COORDINATES — 41

DETERMINE RESIDUAL AS DIFFERENCE BETWEEN MEASURED RANGE AND CALCULATED RANGE USING ESTIMATED COORDINATES — 42

COUNT THE NUMBER OF TIMES THE RESIDUAL IS THE GREATEST AT EACH BASE STATION FOR EACH TIME INSTANT. $t_i$ — 44

FROM VALUE OF RESIDUAL DIFFERENCES DETERMINE WHICH BASE STATION HAS A SIGNIFICANTLY LARGER NUMBER OF GREATEST ABSOLUTE RESIDUAL DIFFERENCES THAN THE NUMBER OF GREATEST ABSOLUTE RESIDUAL DIFFERENCES FROM OTHER BASE STATIONS AND DECLARE IT NLOS — 46

## FIG. 6

24

SMOOTH RANGE MEASUREMENTS
OBTAINED FROM BLOCK 21
— 32

GRAPH CURVE OF SMOOTHED
RANGE MEASUREMENTS
— 52

DETERMINE POINT OF MAXIMUM
DEVIATION OF THE NOISY RANGE
MEASUREMENT CONTAINING
THE NLOS ERROR BELOW
THE SMOOTHED CURVE
— 56

DISPLACE SMOOTHED CURVE
DOWNWARDS TO THE POINT OF
MAXIMUM DEVIATION SO THAT THE
SMOOTHED CURVE PASSES THROUGH
THE POINT OF MAXIMUM DEVIATION
— 58

DISPLACE CURVE UPWARDS BY
VALUE OF NOISE DEVIATION. $\propto_m$
FOR RECONSTRUCTING
MEASUREMENT OF LOS
— 60

FIG. 7

## FIG. 8

## FIG. 9

## FIG. 10A

## FIG. 10B

## FIG. 11A

## FIG. 11B

## FIG. 12

FRACTION OF TIME
BS WAS DECLARED
NLOS

NUMBER OF SAMPLES PER TRIAL

O  BS1 (LOS)

X  BS2 (NLOS)

+  BS3 (NLOS)

*  BS4 (LOS)

EP 0 976 262 B1